(19) Europäisches Patentamt / European Patent Office / Office européen des brevets

(11) **EP 4 389 335 B1**

(12) **EUROPEAN PATENT SPECIFICATION**

(45) Date of publication and mention
of the grant of the patent:
**22.10.2025 Bulletin 2025/43**

(21) Application number: **22216266.1**

(22) Date of filing: **23.12.2022**

(51) International Patent Classification (IPC):
**B23H 7/08** *(2006.01)*     **B23H 3/00** *(2006.01)*

(52) Cooperative Patent Classification (CPC):
**B23H 7/08; B23H 3/00**

(54) **METHOD FOR WIRE ELECTRICAL DISCHARGE MACHINING**

VERFAHREN ZUR FUNKENEROSIVEN DRAHTBEARBEITUNG

PROCÉDÉ D'USINAGE PAR ÉLECTROÉROSION PAR FIL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**26.06.2024 Bulletin 2024/26**

(73) Proprietor: **Agie Charmilles SA
6616 Losone (CH)**

(72) Inventors:
• **Wiessner, Moritz
6600 Locarno (CH)**
• **Boccadoro, Marco
6653 Verscio (CH)**

(74) Representative: **Arend, Christa
United Machining Solutions Management AG
Wankdorfallee 5
3014 Bern (CH)**

(56) References cited:
**CN-A- 109 822 169**    **JP-A- S61 209 819**

• **XU LING-YI ET AL: "Wire breakage prevention for
reciprocated traveling WEDM based on
discharge location detection", THE
INTERNATIONAL JOURNAL OF ADVANCED
MANUFACTURING TECHNOLOGY, SPRINGER,
LONDON, vol. 123, no. 5-6, 22 October 2022
(2022-10-22), pages 1859 - 1875, XP037935171,
ISSN: 0268-3768, [retrieved on 20221022], DOI:
10.1007/S00170-022-10240-0**

## Description

Field of the Invention

The invention relates generally to a method for determining or monitoring the condition of a wire electrode used in a fastwire cutting machine. Moreover, the invention relates to a method for controlling a fastwire machining process in consideration of the present condition of the wire electrode, in particular the wire electrode wearing condition.

Background of the Invention

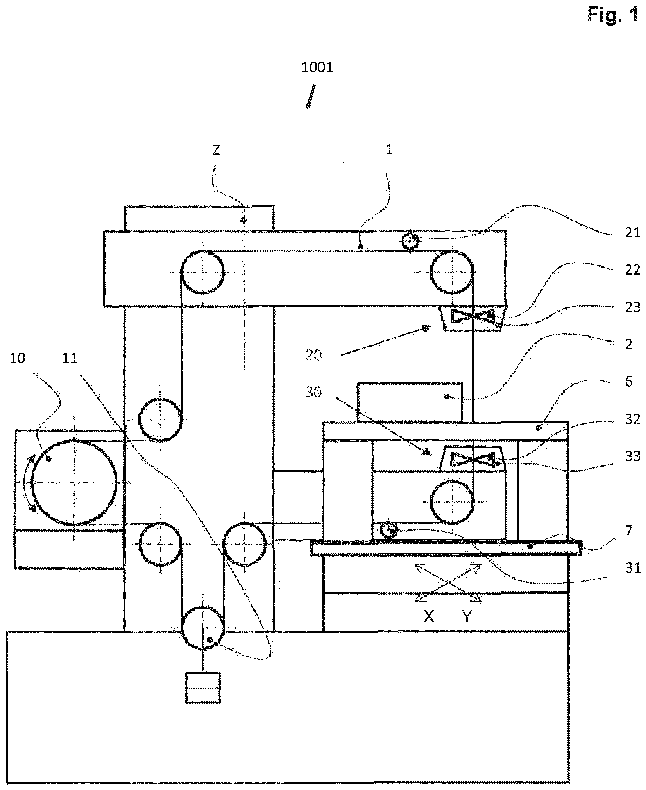

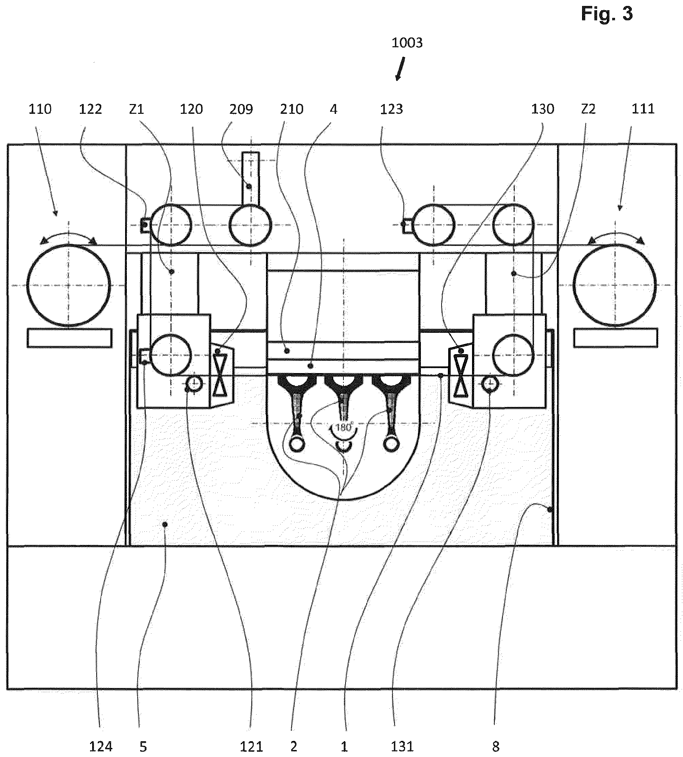

In so-called fastwire machines (a.k.a. high-speed wire electrical discharge machines, HS-WEDM, reciprocating WEDM), the typically molybdenum wire electrode travels at about 10m/s. In contrast to conventional wire electrical discharge machining which takes place in an insulating dielectric, i.e. oil or deionized water, the fastwire machining takes place in a conductive fluid (electrolyte). The fluid is typically carried to the gap by means of nozzles coaxial to the wire. The wire traveling at high speed drags the fluid into the gap. The discharge pulses used in a fastwire process are much longer than WEDM discharge pulses, causing less wire wearing. Moreover, molybdenum wire used in fastwire process has a high evaporation temperature, which again makes it less subject to wearing. Moreover, the high wire traveling speed reduces the thermal load per length unit of the active wire section. The molybdenum wire can be used thousands of times. For this reason it is made to reciprocate, i.e. move back and forth between two wire drums (as shown exemplarily in Figure 3), or more typically, using an individual wire drum which unwinds the wire at one side, and then rewinds the wire on the other side of said drum, once the wire has traveled through the wire traveling circuit (as shown exemplarily in Figure 1). Still, there is a degradation of the wire electrode over time. For instance, a 0.20mm molybdenum wire should be replaced when the residual thickness is about 0.14mm or earlier, to avoid the risk of sudden wire breakage. Wear is typically directional; this means that the wire is somehow flattened on the erosion side. Strictly speaking, the residual thickness of the used wire does not correspond to a diameter. However the residual thickness can be used to monitor the wire wearing because the difference provides a safety margin. However, since wearing depends on the particular machining, on the workpiece material, on the machining parameter settings, flushing condition, etc., service life of the wire electrode cannot always be predicted adequately.

Recently, the fastwire machine AgieCharmilles Cut AM 500, specially dedicated to the separation of additively built parts from a baseplate was developed and offered on the market. As illustrated in EP3360636A1, this machine features a wire electrode traveling horizontally, a rotary table to turn the baseplate upside-down while cutting, and a collecting tray to orderly collect the parts separated from a baseplate. The purpose is increasing the degree of automation in an additive parts production process. The separation process is conducted in an electrolyte bath to ensure the safe flushing of the kerf, which in case of horizontal traveling wire electrode is more critical than with vertical traveling wire.

The wearing of the wire electrode is an issue, because it limits the machining autonomy, and because it affects the productive and non-productive costs. In fact, replacing the wire electrode in fastwire machines is still a tedious manual operation. For this reason, it would be desirable to know the current state of the wire electrode, in particular its state of wear, possibly in a simple way.

In practice one can pause the cutting process and measure the residual wire diameter, manually, to appraise the wearing state using e.g. a micrometric screw gauge, or simply cut until the wire is breaking. But this method is not efficient; it would be desirable to monitor the condition of the wire electrode without user intervention.

Several methods for the determination of the wire diameter in a wire electrical discharge machine are known.

CN109822169A discloses a fastwire machine having a tensioning adjustment mechanism, by which the wire tension is reduced when the wire diameter is reduced due to wearing. The wire circuit includes a wire diameter measuring mechanism for measuring the diameter of the molybdenum wire. The wire diameter is measured by means of an ultrasonic distance measuring sensor, or a laser distance measuring sensor or an infrared distance measuring sensor. This document also discloses a method according to the preamble of claim 1.

CN206578396U discloses a fastwire machine embedding a molybdenum wire monitoring system, to detect the degree of wear of the wire in real time. The monitoring system consists of a digital micrometer and a feedback circuit.

According to the two documents cited above, the diameter of the filament is thus measured directly, by means of a dedicated sensor. Optical wire diameter measuring devices are well known and used for instance in the wire drawing process. They are very fast and accurate, and even very small defects can be identified in-process, with the wire drawn at high speed. A problem with optical wire diameter measuring devices is that they are sensitive to dirt. However, in a fastwire machine it cannot be easily avoided, in particular in the machining area. Moreover, such optical sensors add costs and complexity to the machine. Mechanical gauging means are generally excluded for the same reasons and other drawback.

JPS61209819A discloses a method for the detection of a wire diameter in a machining area and for the detection of a current feeding condition in a wire electrical discharge machine. The condition of the wire electrode is detected by measuring a current which flows in a loop including the wire portion between the upper and the lower current feeder. The measurement is made between an upper- and the lower current feeder; the resistance of a wire section with progressively narrowing cross-section is measured. Moreover, the distance between the upper- and the lower current feeder is comparably short, and said distance changes with the setting of Z-axis position which is a function of the workpiece thickness.

Thus there is need for a simple and reliable method by which the condition of the wire electrode can be monitored, to ensure a possibly uninterrupted machining process.

Summary of the Invention

It is an objective of this invention to provide a measuring method to overcome the drawbacks of the known methods. It is an objective of this invention to provide a simple, reliable and universal wire electrode measuring method and device for fastwire cutting process, to monitor the condition of the wire electrode, to ensure a machining process not interrupted by wire breaking, and to use the wire electrode up to the region of the wear limit.

The present invention discloses a method for the detection of the condition of a wire electrode, for use with a fastwire cutting process, which is also called as fastwire EDM cutting process. In particular, the method is used to detect the condition of a fresh- and/or used wire electrode. Especially, the method is used to determine the wearing condition of the deployed wire electrode.

A first aspect of the present invention is thus directed to a method for the identification of the condition of the wire electrode deployed in a fastwire machine by an electrical measurement of a value reflecting the electrical impedance of a segment of said wire electrode.

More specifically, the invention refers to a method for determining a condition of a wire electrode deployed in a fastwire cutting machine comprising a wire traveling circuit in which the wire travels back- and forth, with a first- and a second wire guiding head by which the wire electrode is guided and positioned in relation to a workpiece laying between these wire guiding heads, whereas the wire electrode is in contact with a first- and a second electrical contact, both contacts being located on said wire traveling circuit, whereas a value reflecting the electrical impedance of a wire electrode segment between the first electrical contact and the second electrical contact is measured, whereas the measurement of said wire electrode segment L is conducted in a dry state and the condition of the wire electrode is derived from the measured value reflecting the electrical impedance of said wire electrode segment L.

According to the present invention, the measurement of the wire electrode segment L is thus conducted in a dry state.

According to the present invention, the identification of the condition includes primarily a wearing status of the deployed wire electrode, which is proportional to its cross section, which in turn is proportional to the electrical impedance of the conductor. Thus by measuring a value reflecting the electrical impedance of the wire electrode wearing status can be estimated. The identification may further include a wire electrode type, the wire electrode diameter, and the appraisal of the quality of a fresh unused wire.

Further aspects are set forth in the dependent claims, the following description and the drawings. Other features are inherent in the methods and products disclosed or will become apparent to those skilled in the art from the following detailed description of embodiments and its accompanying drawings.

Brief Description of the Drawings

Embodiments of the invention are now described, by way of example, and with reference to the accompanying drawings.

FIG. 1      a schematic of a fastwire EDM machine;
FIG. 2a    a schematic of the fastwire EDM machine for submerged operation, with a filled worktank;
FIG. 2b    a schematic of the fastwire machine for submerged operation, in which a worktank was drained;
FIG. 3      a schematic of a horizontal fastwire EDM machine for submerged operation;
FIG. 4      is an exemplary measuring circuit to measure the a value reflecting the electrical impedance of a wire electrode segment;
Fig. 5      is a flowchart to illustrate the monitoring of a deployed wire electrode.

Detailed description and preferred embodiments

Figure 1 is a simplified illustration showing the relevant parts of a typical fastwire EDM machine 1001, which has flushing nozzles to feed the electrolyte to the cutting kerf, but this machine has no bath. In particular, the machine frame, the wire traveling circuit, and the machining area are represented. Generator, control unit, and electrolyte preparation unit are not shown. The wire traveling circuit comprises a wire drum 10, a plurality of pulleys, and a wire tensioning unit 11. The wire electrode is unwound and transported from a wire drum 10 to the machining area and back to the same wire drum 10, where it is recoiled. Then, the wire traveling direction is inverted, and the machining continues with the wire traveling back and forth. Several hundred meters of wire electrode are coiled on the wire drum 10. A predetermined tensioning force is impressed to the wire by means of the wire tensioning unit 11. The workpiece 2 is mounted on a table 6, and a pan 7 collects the electrolyte used in the fastwire cutting process. The electrolyte is provided by means of the nozzles 23, 33 and is dragged into the kerf by the wire. In the machining area, the wire electrode 1 is guided by a wire guide 22 located in the upper wire guiding head 20, and by a wire guide 32 located in the lower wire guiding head 30. The current feeding members 21 and 31 serve to feed the machining current to the traveling wire electrode 1.

The traveling wire electrode 1 is positioned relatively to the workpiece 2 by means of said guiding heads 20, 30, and is moved according to a machining program to generate the desired part.

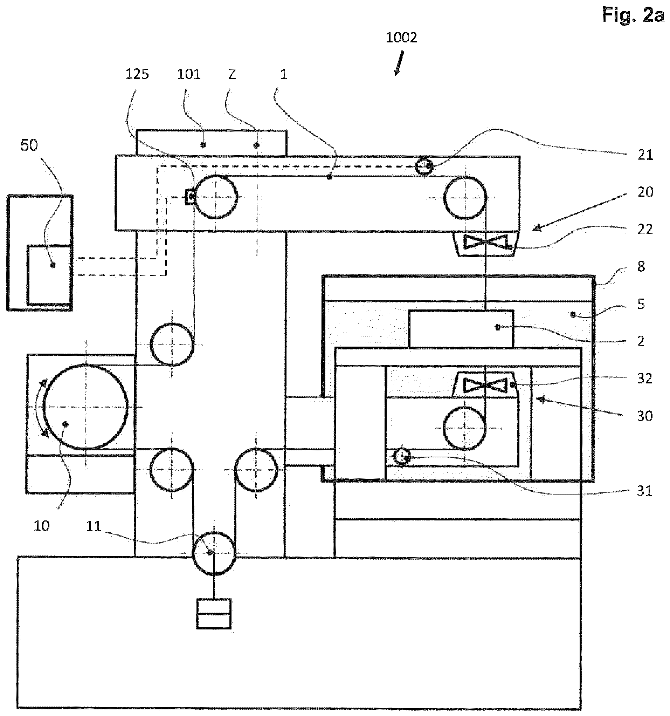

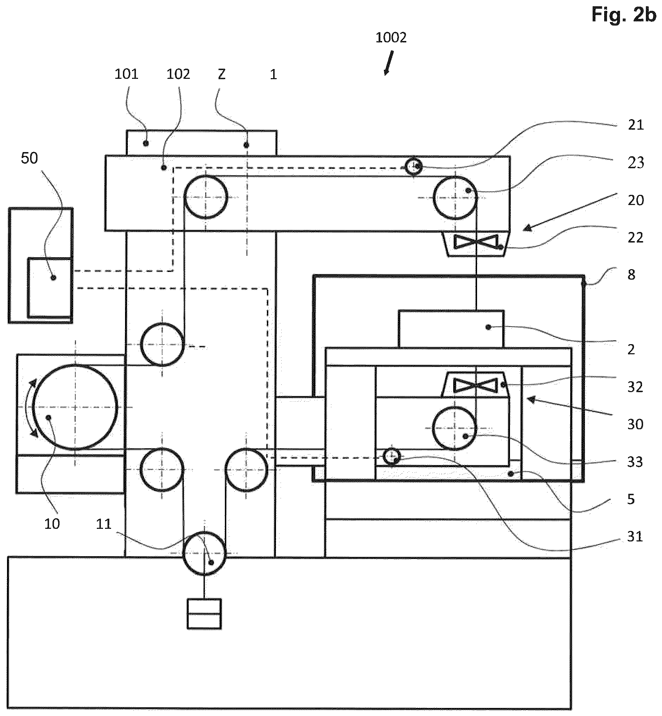

Figure 2a shows schematically a fastwire machine 1002, which is very similar to the one depicted in figure 1, but this one operates in a submerged mode. It has a worktank 8, which is filled with the machining fluid 5. The machining fluid used with fastwire machines is an electrolyte having a conductivity of around 3mS/cm. Figure 2b shows the same fastwire machine 1002, in which the Worktank 8 was drained, and thus the electrolyte level 5 is low.

Figure 3 shows schematically another fastwire machine 1003, which operates in submerged mode. Here, opposite to the previous examples, the wire electrode 1 travels horizontally. The wire is guided in the machining area by means of the wire guiding heads, in particular a left wire guiding head 120 and a right wire guiding head 130. Moreover, the wire is made to travel back and forth between two wire drums 110 and 111, by which the amount of wire electrode stored can be increased massively. This exemplary machine has a rotary axis 210 to rotate a baseplate 4 bearing the additively manufactured parts to be separated by means of the fastwire cutting process.

As mentioned at the beginning, fastwire machines use a molybdenum wire electrode, so that there is comparably low wear. The fastwire machine is operated in a reciprocating mode and the same wire electrode is reused many times. In this way, the fastwire machine can work for several tens of hours. However, the wire electrode 1 is still subject to wear due to the high energy of the discharges occurring between the wire 1 and the workpiece 2. The initial cross-section of the unused wire reduces continuously with the progress of machining by the action of discharges. The wire wearing over time can be uneven, and also if the machining produces a substantially even wear, this wear still depends on the current machining task and cutting conditions. In this respect, determining the reduction in wire diameter or more generally, a value reflecting the cross section and thus the condition of the wire electrode is very useful for the safe operation of the system and for the optimal use of the wire.

According to the present invention, the condition of a wire electrode deployed in a fastwire machine is determined. The machine comprises a wire traveling circuit with a first- and a second wire guiding head by which the wire electrode is guided and positioned in relation to a workpiece laying between these wire guiding heads. The condition of the wire electrode is determined by the fact that the wire electrode is in contact with a first- and a second electrical contact, both contacts being located along of the wire traveling circuit, and that a value reflecting an electrical impedance $Z_L$ of a wire electrode segment L between the first electrical contact and the second electrical contact is measured, whereas the measurement of said wire electrode segment L is conducted in a dry state, and that the condition of the wire electrode is derived from the measured value reflecting the electrical impedance $Z_L$ of said wire electrode segment L.

According to an embodiment of the invention, a value reflecting the electrical impedance of an unused wire electrode and/or a value reflecting the electrical impedance of an exhausted wire electrode is pre-stored in a database, or is determined by measurement and stored in the database, for one or more wire electrodes types and/or a wire electrode diameter.

According to the present invention, an unused wire electrode is a new wire electrode. According to the present invention, an exhausted wire electrode is a wire electrode which, by definition, is at its wire wearing limit. Typically, the database with the pre-stored items is provided by the machine tool manufacturer. The database, which may be local or remote, may include reference value reflecting the electrical impedance of a plurality of wire electrodes of different diameter, type, composition and/or structure. Wire electrode database items including reference value reflecting the electrical impedance are thus pre-stored, so that they are available to the control unit for further use.

According to an embodiment, the value reflecting the electrical impedance of an unused wire electrode and/or the value reflecting the electrical impedance of an exhausted wire electrode is measured and stored in the database. For example, the value reflecting the electrical impedance of an unused wire electrode is measured immediately after the installation of a new molybdenum wire in the wire traveling circuit, and while no machining is performed.

Preferably, the measured value of the electrical impedance is stored with additional information, such as wire diameter, wire type, composition and structure, manufacturer, production date, date of first use of the wire spool, etc.. Certain data can be automatically retrieved by the fastwire machine, for instance from an RFID chip stuck on the wire spool, or are transcribed manually. By the measurement it is possible to collect reference values reflecting the impedance of a deployed wire electrode, for instance of a wire electrode having unknown electrical impedance.

Typically, the value reflecting the electrical impedance of an exhausted wire electrode is determined by measurement in dedicated experiments and stored in the database.

The reference value reflecting the electrical impedance of an exhausted wire electrode can also be determined roughly, in a simplified way, by multiplying the previously determined or known value reflecting the electrical impedance of an unused wire electrode by a factor, for instance 70%.

According to an embodiment, a wearing condition of the deployed wire electrode is determined by comparing the measured value reflecting the electrical impedance of the currently deployed wire electrode with a reference value reflecting the electrical impedance

- of an unused wire electrode of same type, or
- of an exhausted wire electrode of same type.

The actual wearing condition of the deployed wire electrode is thus determined for a wire segment L between the first electrical contact and the second electrical contact by measuring the value reflecting the electrical impedance and by comparing said measured value with a known reference value reflecting the electrical impedance. For the reference value one can use the value reflecting the electrical impedance of a new, unused wire electrode of same type, e.g. multiplied by a factor 0.6 to determine a value reflecting the electrical impedance of an exhausted wire electrode.

Moreover, knowing e.g. the reference value reflecting the electrical impedance of an exhausted wire electrode, one can determine the wearing status by computing the difference of the reference value with the measured value reflecting the electrical impedance of the deployed wire electrode; the end of life of the wire electrode is reached when the said difference is zero. In this way it is also possible to extrapolate how much time the fastwire machine can continue to operate with the currently deployed wire electrode, and to decide if the deployed wire electrode must be replaced to execute the next machining or not, etc.

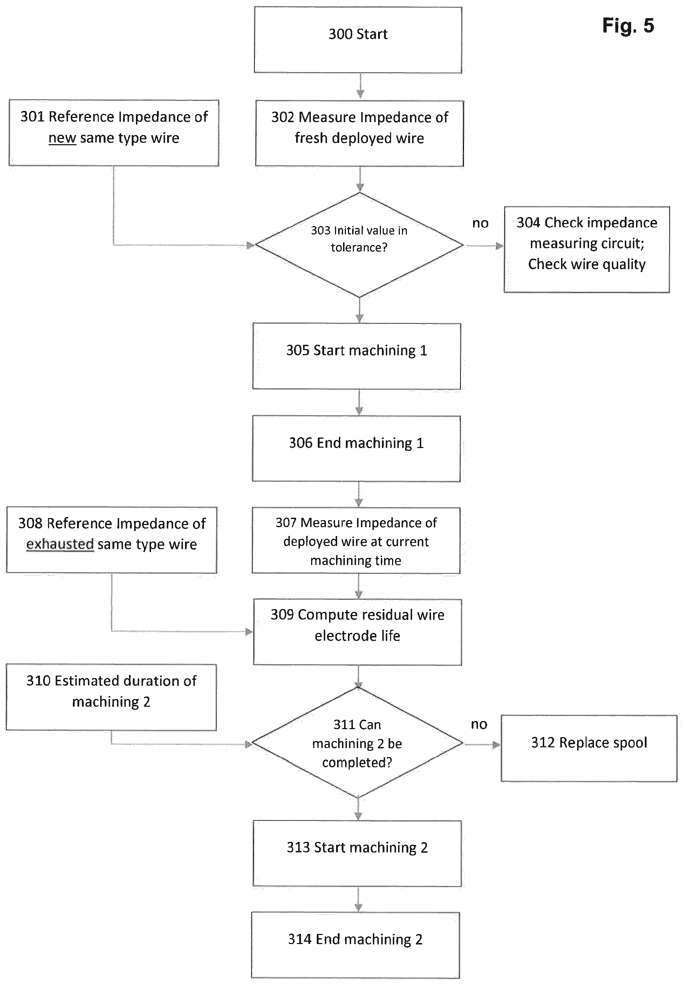

According to another embodiment, the residual machining time to full exhaust of the deployed wire electrode is estimated based on one or more measurements of the value reflecting the electrical impedance $Z_L$. Here, based on the known value reflecting the electrical impedance of the exhausted wire electrode and one or more measurements of the value reflecting the electrical impedance $Z_L$ of the partially used wire, one can estimate the residual wire electrode life and set the possible residual machining time accordingly. For instance, a measurement is carried out after the execution of a first machining, and a wear rate of the deployed wire electrode is derived based on the difference of the initial value reflecting the electrical impedance (of a new wire electrode) and the measurement carried out after the first machining, in consideration of e.g. the machining time of the first machining. One can estimate the residual wire electrode life e.g. by applying the same wear rate. As illustrated in figure 5, knowing the current wearing condition of the deployed wire electrode (residual wire electrode life) and at least roughly knowing the duration of a second machining, one can determine if it is possible to complete said second machining with the currently deployed wire electrode. Accordingly, the user may get a message with the request to replace the wire electrode, or the machine may execute another action, as discussed here below.

As shown in figure 5, the process begins at step 300, with the setup of the machine. The impedance of the freshly deployed wire can be measured 302. Based on the measured value and the reference impedance of a new wire having the same type 301, it is determined if the initial value is within the tolerance 303. If the initial value is not in tolerance, the impedance measure circuit or the wire quality is checked 304. If the initial value is in tolerance, the start of machining 1 can be executed 305. After the end of the machining 1 shown in step 306, the impedance of the deployed wire at current machining time is measured again 307. The residual wire electrode life is computed 309 based on the measure value and the reference impedance of exhausted wire having the same type 308. In the step 309, it is determined if the machining 2 can be completed based on the computed residual wire electrode life and the estimated duration of the machining 2. If the computed residual wire electrode life is not sufficient to complete the machining 2, the spool replacement is executed 312. If the computed residual wire electrode life is sufficient to complete the machining 2, the machining 2 can be started 313 and completed as shown in the step 314.

According to a further embodiment, the value reflecting the impedance of the deployed wire electrode is compared with a reference value reflecting the impedance of the wire electrode at a wire wearing limit, and, when the comparison reveals that the wire electrode is exhausted, the control unit executes one or more of the following actions:

- complete the current cut, the current machining or the current workpiece by using the current machining parameters,
- complete the current cut, the current machining or the current workpiece by using reduced machining parameters,
- release of a warning or alert message,
- pause or stop the current machining,
- replace the wire electrode.

As mentioned in an earlier example, a 0.20 mm molybdenum wire should be replaced when the residual thickness is about 0.14 mm or earlier, to avoid the risk of sudden wire breakage. Preferably, the reference values reflecting the impedance at a wire wearing limit of the molybdenum wire electrodes of different size is stored in a database, and used for comparison with the value reflecting the impedance of the deployed wire electrode. A decision if and how to continue the fastwire process may be based on said comparison. An action may also be taken before the wire wear limit is reached, so that the current machining can be completed.

In the fastwire process the wire wears very slowly, so that in general it is possible to finish the current operation for a short while when the wire is "exhausted". However, the wire should be replaced at the earliest opportunity to avoid wire breaking, damage to a workpiece and additional work to restore the operation. Thus, the control unit of the machine tool or its user interface may release a warning message to inform the operator that the wire electrode must be replaced. The control unit may pause or stop the process to avoid a wire breaking, and resume after the replacement of the wire electrode by the operator. In future, the replacement of the wire electrode may be an automated process.

According to a further embodiment, the measurement of the electrical impedance of the currently deployed unused wire electrode is conducted before the machining start, whereas the determined condition of the deployed wire electrode is one of wire electrode type and/or a wire electrode diameter and/or the wire quality.

In such embodiment, the same system used to determine the wearing condition of the wire electrode deployed in the machining process can be used to determine the condition of the fresh wire electrode. Here the determined condition of the wire electrode is not the wire wearing condition, since the measurement is conducted with an unused wire electrode. For instance, the measurement of the electrical impedance of the unused wire serves to verify if the value for the deployed wire correspond to the expected nominal value. The measured electrical impedance may deviate, for example, because the wire type or diameter is wrong, or the quality of the wire electrode is not as expected, or the first- and/or the second electrical contact laying in a wire evacuation section of the wire traveling circuit is not working properly, etc.

If the measured value deviates substantially from an expected value, the user may get a warning message, and the machining may be paused, and the wire electrode may be replaced. The user may get further information and support to determine the reason for such deviation. This measurement is preferably conducted before the start of machining, once the wire is inserted in the wire traveling circuit, while the wire travels or while it is resting.

According to a further embodiment, the value reflecting the electrical impedance $Z_L$ is determined by applying a DC current signal having a defined value to the considered wire electrode segment L between the first- and the second electrical contact, and by measuring the voltage between these contacts, and/or by applying a DC voltage signal having a defined value to the considered wire electrode segment L between the first- and the second electrical contact, and by measuring the current between these contacts.

In the first case, by applying a defined DC current, the measured voltage is proportional to the electrical impedance $Z_L$ of the wire segment L. In the second case, by applying a defined DC voltage, the measured current is proportional to the electrical impedance $Z_L$ of the wire segment L.

Assuming a substantially uniform wire wearing, the measured value reflecting the electrical impedance $Z_L$, e.g. the resistance $R_L$ of a measured wire electrode section L, is proportional to the cross-sectional area of the deployed wire electrode 1, and therefore it is a meaningful value for assessing the state of wear of the wire. Thus, knowing the nominal characteristics of the new deployed wire electrode, the measurement of the value reflecting the electrical impedance $Z_L$, the comparison with a stored reference value, e.g. comparison with the reference value reflecting the electrical impedance, reveals the condition of a used- or unused wire electrode. It is noted that, the value of an electrical resistance $R_L$ can be easily computed e.g. based on an applied current and a measured voltage, but said value of electrical resistance $R_L$ is not necessarily required to determine the condition of the wire electrode.

The first- and a second electrical contact delimiting the wire electrode segment L to be measured may be located at an arbitrary position of the wire traveling circuit. It goes without saying that the contacts must be insulated with respect to each other, and generally also with respect to the machine body. In addition, in case of a fastwire machining with single wire drum, the measurement of the value reflecting the impedance is affected by the fact that there is a section of the wire circuit which is in parallel to the wire section L, i.e. the section of the wire circuit which includes the wire drum. This should be considered by placing the measuring contacts accordingly, or by correction of the measurements.

In operation, the wire electrode traveling in the working area is surrounded by the electrically conductive electrolyte. The presence of the electrolyte in parallel to the wire electrode reduces the electrical impedance. Thus, according to the present invention, the value reflecting the electrical impedance of the wire electrode segment L is measured in a dry state, so that the measured value is not affected by the presence of the electrolyte.

According to the present invention, said dry state is achieved by measuring the wire electrode segment L outside of the machining area, and/or by stopping the supply of a machining fluid through the flushing nozzles, and/or by draining or lowering the level of a machining fluid bath, and/or by moving the wire electrode out of the machining fluid bath.

A "dry state" is achieved for instance by measuring the wire electrode segment L outside of the machining area, e.g. in a wire supply section or a wire evacuation section of the wire traveling circuit. Here the wire electrode is not in contact with the electrolyte, normally.

However, the dry state may also be achieved in the machining area, if there is no electrolyte around the wire electrode or other conducting elements in contact or in proximity of the wire electrode. For instance, in case of the fastwire machine 1001 of figure 1 operating in jet flushing mode, the wire electrode segment L to be measured may be located in the machining area, e.g. between the upper current feeder 21 and the lower current feeder 31, when the electrolyte is not supplied through the nozzles 23, 33.

In case of the fastwire machine 1002 of figure 2b, which operates in submerged mode, the measurement of the wire electrode segment L may be carried out at the upper portion of the wire traveling circuit, e.g. between the contact 125 and the upper current feeder 21, in a dry region. In this way, the electrolyte is not necessarily drained from the worktank.

The figures 2a and 2b further shows the measuring circuit 50, for the measurement of a value reflecting the electrical impedance.

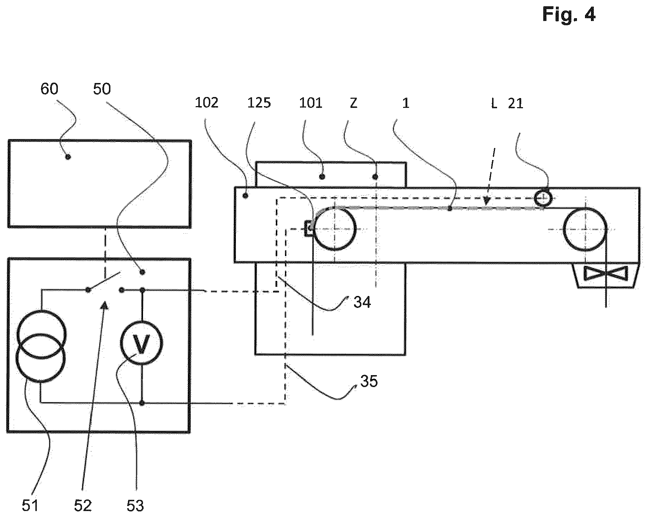

Figure 4 is an exemplary measuring circuit to measure the value reflecting the electrical impedance of a wire electrode segment. Figure 4 shows a measuring loop for the example shown in figure 2a, and an exemplary measuring circuit for the measurement of the electrical impedance (e.g. resistance) of a currently monitored wire electrode segment L. A DC current signal $I_M$ is provided by the current source 51, and is applied at the measuring loop which comprises the leads 34 and 35, the upper current feeder 21, the measuring contact 125, and the wire segment L to be measured. A switch 52 is provided to open the measuring circuit. For instance, the switch of the measuring circuit is controlled by a control circuit 60. The switch is synced with the operation of the fastwire process. The switch controlling the measurement circuit is closed e.g. when the machine is paused or stopped. When the switch 52 is closed the measuring current provided by the current source flows through the measuring circuit, and a voltage $U_M$ is measured by voltage measurement unit 53. The resistance $R_L$ of the wire segment L is computed according to ohm's law:

$$R_L = U_M \; / \; I_M$$

In case of a fastwire machine operating in submerged mode, the measurement of the value reflecting the electrical impedance $Z_L$ of wire electrode segment L may still be carried out in the machining area, e.g. between the current feeders, but here the electrolyte 5 must first be drained from the worktank, or the electrolyte must be lowered at least to a level at which it is not in contact with the wire electrode, and the electrolyte flow around the wire electrode is stopped. In this way the measurement of the electrical impedance $Z_L$ of wire electrode segment L is conducted in a substantially dry portion of the wire traveling circuit, in a dry state, and the measurement is not affected by the electrolyte.

An example hereto is shown in figure 2b, which shows the fastwire machine 1002 which can operate in submerged mode. The worktank 8 is drained and the electrolyte flushing flow is stopped. The measurement of wire electrode segment L is carried out between the upper current feeder 21 and the lower current feeder 31. In some embodiments the pulleys 23, 33 are used as power feeder and/or as measuring contacts the measurement of the electrical impedance $Z_L$. The use of existing current feeders or pulleys as measuring contacts is of advantage, because no extra contacts are required.

According to an embodiment the residual electrolyte is removed from the electrode wire by one or more air nozzles and/or water nozzles and/or wipers deployed on the wire traveling circuit. The electrolyte may still adhere to the wire electrode after stopping the supply of the electrolyte by the nozzles. This may affect the measurement of value reflecting the electrical impedance. For this reason, according to the present embodiment there is a device along the wire traveling circuit, to remove the residual electrolyte from the wire, e.g. an air nozzle coaxial with the wire electrode. For instance, the at the end of a machining the supply of electrolyte is stopped, then the air supply is activated with the wire electrode still traveling back and forth, and lastly the electrode is stopped for the measurement of the value reflecting the electrical impedance of wire electrode segment L.

According to an embodiment, the wire electrode and the workpiece are moved away from each other.

Here, the measurement is carried out with the wire electrode positioned at a distance from the workpiece, or when there is no workpiece mounted on the table 6 of the machine. This is to avoid an accidental contact with the workpiece while measuring, due to e.g. electrolyte droplets, machining debris, etc.. For this reason, according to an embodiment of the present invention, the wire electrode and the workpiece are moved away from each other for the measurement of the value reflecting the electrical impedance of wire electrode segment L.

Preferably, the measurement is carried out before a machining and/or thereafter, to avoid process interruptions.

As mentioned earlier, the fastwire machine can work for several tens of hours before the wire electrode is exhausted and needs to be replaced, because the molybdenum wire electrode wears very slowly. A typical fastwire cutting process may take anywhere from few minutes up to a few hours. Due to the low wearing the fastwire cutting process is not necessarily paused to carry out the measurement of the electrical impedance $Z_L$, but the measurement may be carried out after each one or more cutting operation, when the flushing jet is anyway stopped, and/or the worktank is drained.

However, the measurement can also be executed in the course of a process pause. In particular, an intermediate measurement may be carried out in case of a very long machining, or if disturbances occur in the course of the machining, since disturbances may be the origin of increased wire wearing.

According to another embodiment, the value reflecting the impedance of the wire electrode is measured at the time when the wire traveling speed is zero. This is of advantage for the quality of the measurement, because in operation of a fastwire machine the wire traveling speed is very high.

According to a further embodiment, the average discharge current is controlled as a function of the measured wire wearing condition of the wire electrode.

The average discharge current is controlled e.g. by adjusting the discharge frequency, or the current amplitude, or the pulse shape, or a combination thereof.

The process is conducted by adjusting the average discharge current as a function of the measured wire wearing condition of the wire electrode. In this way the machining speed is increased without risk of wire breaking.

According to an embodiment, at least one of the current feeders 21, 31 and the pulleys 23, 33 and the wire drum 10, 20, 30 is used as a contact for the measurement of the value reflecting the impedance of the wire electrode.

For instance, one may use the existing pulley 23 as a first electrical contact and pulley 33 as the second electrical contact for the measurement. By using the existing elements of the wire traveling circuit such as current feeders 21, 31 or existing pulleys 23, 33, or a wire drum 10, 20, 30, the number of additional components required for the measurement of the value reflecting the electrical impedance of the wire is limited. Moreover, the friction with the traveling wire is not increased by additional elements.

According to an embodiment, the value reflecting the electrical impedance is the electrical resistance of the wire segment L. Said resistance is measured e.g. by applying a DC current pulse between the contacts and by measuring the resulting voltage, which according to Ohm's law depends only from the applied current and the resistance of wire segment L. If the deployed wire electrode type is unknown, the DC current pulse may be initially set to a low value and progressively raised. In this way a wire type and/or diameter is identified, using additional information available to the control unit, where required.

It is understood that the method according to the invention can be combined with other sensing methods, e.g. to improve the trustiness. For instance, other sensors can be used to determine the size of the fresh wire, e.g. the optical sensors used in the prior art. Additional characteristics of the wire electrode can be sensed and combined with the information provided by the invention, e.g. a wire temperature of a used wire. In addition, the method may be combined with wire wearing and/or a wire temperature derived from a model, e.g. a model based on the discharge pulse energy and discharge pulse frequency to derive a condition of the wire electrode, e.g. a wearing condition.

Reference List

| | |
|---|---|
| 1 | wire electrode |
| 2 | workpiece |
| 4 | baseplate |
| 5 | electrolyte |
| 6 | table |
| 7 | electrolyte collecting pan |
| 8 | work tank |
| 10, 110, 111 | wire drum |
| 11 | wire tensioning device |
| 20, 30 | upper- and lower wire guiding head |
| 34, 35 | leads |
| 21, 31 | upper- and lower current feeder |
| 121, 131 | left- and right current feeder |
| 22, 32 | wire guide |
| 34, 35 | lead |
| 50 | impedance measuring circuit |
| 51 | current source |
| 52 | switch |
| 53 | voltage measurement |
| 60 | control circuit |
| 120, 130 | left- and right wire guiding head |
| 122-125 | measuring contacts |
| 209 | dancer roll |
| 300-314 | steps of method |
| 1001-1003 | a fastwire machine |

**Claims**

1. Method for determining a condition of a wire electrode (1) deployed in a fastwire cutting machine (1001, 1002, 1003), the fastwire cutting machine comprising a wire traveling circuit in which the wire travels back and forth, with a first- and a second wire guiding head by which the wire electrode is guided and positioned in relation to a workpiece laying between these wire guiding heads, **characterized in that**

   the wire electrode is in contact with a first- and a second electrical contact, both contacts being located on the wire traveling circuit, and that a value reflecting an electrical impedance $Z_L$ of the wire electrode segment L between the first electrical contact and the second electrical contact is measured, wherein the measurement of said wire electrode segment L is conducted in a dry state, and that the condition of the wire electrode is derived from the measured value reflecting the electrical impedance $Z_L$ of said wire electrode segment L.

2. The method for determining a condition of a wire electrode according claim 1, **characterized in that** a reference value reflecting the electrical impedance

of an unused wire electrode and/or an exhausted wire electrode is pre-stored in a database or is determined by measurement and stored in the database, for one or more wire electrodes types and/or a wire electrode diameter.

3. The method for determining a condition of a wire electrode according to claim 1 or 2, **characterized in that** a wearing condition of the deployed wire electrode is determined by comparing the measured value reflecting the electrical impedance $Z_L$ with the reference value reflecting the electrical impedance

   - of an unused wire electrode of same type, or
   - of an exhausted wire electrode of same type.

4. The method according to one of the preceding claims, **characterized in that** residual machining time to full exhaust of the deployed wire electrode is estimated based on one or more measurements of the value reflecting the electrical impedance $Z_L$.

5. The method according to one of the preceding claims, wherein the value reflecting the impedance of the wire electrode is compared with a reference value reflecting the impedance of the wire electrode at a wire wearing limit, and that, when the comparison reveals that the wire electrode is exhausted, the control unit executes one or more of the following actions:

   - complete the current cut, the current machining or the current workpiece by using the current machining parameters,
   - complete the current cut, the current machining or the current workpiece by using reduced machining parameters,
   - release of a warning or alert message,
   - pause or stop the current machining,
   - replace the wire electrode.

6. The method according to one of the preceding claims, **characterized in that** the determined condition of the deployed wire electrode is one of:

   - the wire quality,
   - the wire type,
   - the wire diameter.

7. The method according to one of the preceding claims, wherein the value reflecting the electrical impedance $Z_L$ is determined by:

   - applying a defined DC current signal having a defined value to the considered wire electrode segment L between the first- and the second electrical contact, and by measuring the voltage between the a first- and the second electrical contact, and/or
   - applying a defined DC voltage signal having a defined value to the considered wire electrode segment L between the first- and the second electrical contact, and by measuring the current between the first- and the second electrical contact.

8. Method according to one of the preceding claims, wherein said dry state is achieved by:

   - stopping the supply of a machining fluid through the flushing nozzles, and/or
   - draining or lowering the level of a machining fluid bath, and/or
   - moving the wire electrode out of the machining fluid bath.

9. The method according to one of the preceding claims, **characterized in that** the residual electrolyte is removed from the electrode wire by one or more air nozzles and/or water nozzles and/or wipers deployed on the wire traveling circuit.

10. The method according to one of the preceding claims, **characterized in that** the wire electrode and the workpiece are moved away from each other.

11. The method according to one of the preceding claims, **characterized in that** the value reflecting the electrical impedance ZL of the wire electrode is measured at a time when the wire traveling speed is zero.

12. The method according to one of the preceding claims, **characterized in that** the average discharge current is controlled as a function of the measured wire wearing condition of the wire electrode.

13. The method according to one of the preceding claims, **characterized in that** at least one of the current feeders (21, 31) and the pulleys (23, 33) and a wire drum (10, 20, 30) is used as a contact for the measurement of the value reflecting the impedance of the wire electrode.

**Patentansprüche**

1. Verfahren zum Bestimmen eines Zustandes einer Drahtelektrode (1), die in einer Kaltdraht-Schneidemaschine (1001, 1002, 1003) verwendet wird, wobei die Kaltdraht-Schneidemaschine einen Drahtbewegungskreis umfasst, in dem sich der Draht vor und zurück bewegt, mit einem ersten und einem zweiten Drahtführungskopf, durch welche die Drahtelektrode geführt und im Verhältnis zu einem zwischen diesen Drahtführungsköpfen liegenden Werkstück positioniert wird,
**dadurch gekennzeichnet, dass**

die Drahtelektrode in Kontakt mit einem ersten und einem zweiten elektrischen Kontakt steht, wobei sich beide Kontakte an dem Drahtbewegungskreis befinden,
und dass ein Wert gemessen wird, der eine elektrische Impedanz $Z_L$ des Drahtelektrodenelements L zwischen dem ersten elektrischen Kontakt und dem zweiten elektrischen Kontakt widerspiegelt,
wobei das Messen des Drahtelektrodenelements L in einem trockenen Zustand ausgeführt wird, und dass der Zustand der Drahtelektrode von dem gemessenen Wert abgeleitet wird, der die elektrische Impedanz $Z_L$ des Drahtelektrodenelements L widerspiegelt.

2. Verfahren zum Bestimmen eines Zustandes einer Drahtelektrode nach Anspruch 1, **dadurch gekennzeichnet, dass** für eine oder mehrere Arten von Drahtelektroden und/oder einen Drahtelektrodendurchmesser ein Referenzwert, der die elektrische Impedanz einer nicht verwendeten Drahtelektrode und/oder einer verbrauchten Drahtelektrode widerspiegelt, vorab in einer Datenbank gespeichert wird oder durch Messen und Speichern in der Datenbank bestimmt wird.

3. Verfahren zum Bestimmen eines Zustandes einer Drahtelektrode nach Anspruch 1 oder 2, **dadurch gekennzeichnet, dass** ein Verschleißzustand der eingesetzten Drahtelektrode bestimmt wird durch Vergleichen des gemessen Wertes, der die elektrische Impedanz $Z_L$ widerspiegelt, mit dem Referenzwert, der die elektrische Impedanz von Folgendem widerspiegelt:

- einer nicht verwendeten Drahtelektrode gleicher Art oder
- einer verbrauchten Drahtelektrode gleicher Art.

4. Verfahren nach einem der vorhergehenden Ansprüche, **dadurch gekennzeichnet, dass** die restliche Bearbeitungszeit bis zum vollständigen Verbrauch der verwendeten Drahtelektrode basierend auf einer oder mehreren Messungen des Wertes, der die elektrische Impedanz $Z_L$ widerspiegelt, geschätzt wird.

5. Verfahren nach einem der vorhergehenden Ansprüche, wobei der Wert, der die Impedanz der Drahtelektrode widerspiegelt, mit einem Referenzwert verglichen wird, der die Impedanz der Drahtelektrode bei einer Drahtverschleißgrenze widerspiegelt, und dass die Steuereinheit, wenn der Vergleich zeigt, dass die Drahtelektrode verbraucht ist, eine oder mehrere der folgenden Aktionen durchführt:

- Abschließen des aktuellen Schnitts, der aktuellen Bearbeitung oder des aktuellen Werkstücks unter Verwendung der aktuellen Bearbeitungsparameter,
- Abschließen des aktuellen Schnitts, der aktuellen Bearbeitung oder des aktuellen Werkstücks unter Verwendung reduzierter Bearbeitungsparameter,
- Ausgeben einer Warnung oder einer Alarmierungsnachricht,
- Anhalten oder Beenden der aktuellen Bearbeitung,
- Austauschen der Drahtelektrode.

6. Verfahren nach einem der vorhergehenden Ansprüche, **dadurch gekennzeichnet, dass** der bestimmte Zustand der eingesetzten Drahtelektrode einer der Folgenden ist:

- die Drahtgüte,
- die Art des Drahtes,
- der Drahtdurchmesser.

7. Verfahren nach einem der vorhergehenden Ansprüche, wobei der Wert, der die elektrische Impedanz $Z_L$ widerspiegelt, durch Folgendes bestimmt wird:

- Anlegen eines definierten Gleichstromsignals, das einen definierten Wert aufweist, an das in Frage kommende Drahtelektrodensegment L zwischen dem ersten und dem zweiten elektrischen Kontakt und durch Messen der Spannung zwischen dem ersten und dem zweiten Elektrodenkontakt und/oder
- Anlegen eines definierten Gleichstromsignals, das einen definierten Wert aufweist, an das in Frage kommende Drahtelektrodensegment L zwischen dem ersten und dem zweiten elektrischen Kontakt und durch Messen der Stromstärke zwischen dem ersten und dem zweiten Elektrodenkontakt.

8. Verfahren nach einem der vorhergehenden Ansprüche, wobei der trockene Zustand durch Folgendes erreicht wird:

- Beenden der Zufuhr eines Bearbeitungsfluids durch die Spüldüsen und/oder
- Ablassen eines Bearbeitungsfluidbades oder Senken des Pegels desselben und/oder
- Bewegen der Drahtelektrode aus dem Bearbeitungsfluidbad.

9. Verfahren nach einem der vorhergehenden Ansprüche, **dadurch gekennzeichnet, dass** der restliche Elektrolyt durch eine oder mehrere Luftdüsen und/oder Wasserdüsen und/oder Wischer, die an dem Drahtbewegungskreis eingesetzt werden, von dem Elektrodendraht entfernt wird.

10. Verfahren nach einem der vorhergehenden Ansprüche, **dadurch gekennzeichnet, dass** die Drahtelektrode und das Werkstück voneinander weg bewegt werden.

11. Verfahren nach einem der vorhergehenden Ansprüche, **dadurch gekennzeichnet, dass** der Wert, der die elektrische Impedanz $Z_L$ der Drahtelektrode widerspiegelt, zu einer Zeit gemessen wird, zu der die Bewegungsgeschwindigkeit des Drahtes null beträgt.

12. Verfahren nach einem der vorhergehenden Ansprüche, **dadurch gekennzeichnet, dass** der durchschnittliche Entladestrom als eine Funktion des gemessenen Verschleißzustandes des Drahtes gesteuert wird.

13. Verfahren nach einem der vorhergehenden Ansprüche, **dadurch gekennzeichnet, dass** mindestens eine der Stromzuführungen (21, 31) und der Rollen (23, 33) und einer Drahttrommel (10, 20, 30) als Kontakt für das Messen des Wertes verwendet wird, der die Impedanz der Drahtelektrode widerspiegelt.

## Revendications

1. Procédé de détermination de l'état d'un fil-électrode (1) déployé dans une machine de découpe rapide de fil (1001, 1002, 1003), la machine de découpe rapide de fil comprenant un circuit de déplacement de fil dans lequel le fil se déplace en va-et-vient, avec une première et une seconde tête de guidage de fil au moyen desquelles le fil-électrode est guidé et positionné par rapport à une pièce placée entre ces têtes de guidage de fil,
**caractérisé en ce que**

le fil-électrode est en contact avec un premier et un second contact électrique, les deux contacts étant situés sur le circuit de déplacement du fil, et **en ce qu'**une valeur reflétant une impédance électrique $Z_L$ du segment de fil-électrode L entre le premier contact électrique et le second contact électrique est mesurée,
dans lequel la mesure dudit segment de fil-électrode L est effectuée à l'état sec, et l'état du fil-électrode est dérivé de la valeur mesurée reflétant l'impédance électrique $Z_L$ dudit segment de fil-électrode L.

2. Procédé pour déterminer un état d'un fil-électrode selon la revendication 1, **caractérisé en ce qu'**une valeur de référence reflétant l'impédance électrique d'un fil-électrode inutilisé et/ou d'un fil-électrode épuisé est mémorisée au préalable dans une base de données ou est déterminée par mesure et mémorisée dans la base de données, pour un ou plusieurs types de fil-électrode et/ou un diamètre de fil-électrode.

3. Procédé pour déterminer un état d'un fil-électrode selon la revendication 1 ou 2, **caractérisé en ce qu'**un état d'usure du fil-électrode déployé est déterminé en comparant la valeur mesurée reflétant l'impédance électrique $Z_L$ à la valeur de référence reflétant l'impédance électrique

- d'un fil-électrode inutilisé du même type, ou
- d'un fil-électrode épuisé du même type.

4. Procédé selon l'une quelconque des revendications précédentes, **caractérisé en ce que** le temps d'usinage résiduel jusqu'à l'épuisement complet du fil-électrode déployé est estimé sur la base d'une ou plusieurs mesures de la valeur reflétant l'impédance électrique $Z_L$.

5. Procédé selon l'une des revendications précédentes, dans lequel la valeur reflétant l'impédance du fil-électrode est comparée à une valeur de référence reflétant l'impédance du fil-électrode à une limite d'usure du fil, et dans lequel, lorsque la comparaison révèle que le fil-électrode est épuisé, l'unité de commande exécute une ou plusieurs des actions suivantes :

- achever la coupe en cours, l'usinage en cours ou la pièce en cours en utilisant les paramètres d'usinage en cours,
- achever la coupe en cours, l'usinage en cours ou la pièce en cours en utilisant des paramètres d'usinage réduits,
- délivrer un message d'avertissement ou d'alerte,
- mettre en pause ou arrêter l'usinage en cours,
- remplacer le fil-électrode.

6. Procédé selon l'une quelconque des revendications précédentes, **caractérisé en ce que** l'état déterminé du fil-électrode déployé est l'un des suivants :

- la qualité du fil,
- le type de fil,
- le diamètre du fil.

7. Procédé selon l'une des revendications précédentes, dans lequel la valeur reflétant l'impédance électrique $Z_L$ est déterminée par :

- l'application d'un signal de courant continu défini ayant une valeur définie au segment de fil-électrode considéré L entre le premier et le second contact électrique, et la mesure de la tension entre le premier et le second contact électrique, et/ou

- l'application d'un signal de tension continue défini ayant une valeur définie au segment de fil électrode L considéré entre le premier et le second contact électrique, et la mesure du courant entre le premier et le second contact électrique.

8. Procédé selon l'une des revendications précédentes, dans lequel ledit état sec est obtenu par :

- l'arrêt de l'alimentation en fluide d'usinage à travers les buses de rinçage, et/ou
- la vidange ou l'abaissement du niveau d'un bain de liquide d'usinage, et/ou
- le déplacement du fil-électrode hors du bain de liquide d'usinage.

9. Procédé selon l'une quelconque des revendications précédentes, **caractérisé en ce que** l'électrolyte résiduel est éliminé du fil électrode par une ou plusieurs buses d'air et/ou buses d'eau et/ou raclettes déployées sur le circuit de déplacement du fil.

10. Procédé selon l'une quelconque des revendications précédentes, **caractérisé en ce que** le fil-électrode et la pièce sont éloignés l'un de l'autre.

11. Procédé selon l'une des revendications précédentes, **caractérisé en ce que** la valeur reflétant l'impédance électrique ZL du fil-électrode est mesurée à un instant où la vitesse de déplacement du fil est nulle.

12. Procédé selon l'une quelconque des revendications précédentes, **caractérisé en ce que** le courant de décharge moyen est commandé en fonction de l'état d'usure mesuré du fil-électrode.

13. Procédé selon l'une quelconque des revendications précédentes, **caractérisé en ce qu'**au moins l'un des distributeurs de courant (21, 31) et des poulies (23, 33) et un tambour de fil (10, 20, 30) sont utilisés comme contact pour la mesure de la valeur reflétant l'impédance du fil-électrode.

**Fig. 1**

**Fig. 2a**

**Fig. 2b**

**Fig. 3**

1003

110    122    Z1    120    209    210    4    123                130    Z2    111

124    5          121    2    1    131          8

**Fig. 4**

**Fig. 5**

```
                              ┌─────────────────────┐
                              │     300 Start       │
                              └─────────────────────┘
                                        │
                                        ▼
┌─────────────────────────┐   ┌─────────────────────────┐
│ 301 Reference Impedance │   │ 302 Measure Impedance of│
│  of new same type wire  │   │   fresh deployed wire   │
└─────────────────────────┘   └─────────────────────────┘
            │                             │
            │                             ▼
            │                      ╱──────────────╲            no    ┌─────────────────────────┐
            └────────────────────▶│ 303 Initial value│─ ─ ─ ─ ─ ─ ─▶│ 304 Check impedance     │
                                  │  in tolerance?   │              │ measuring circuit;      │
                                   ╲──────────────╱               │ Check wire quality      │
                                        │                           └─────────────────────────┘
                                        ▼
                              ┌─────────────────────────┐
                              │   305 Start machining 1 │
                              └─────────────────────────┘
                                        │
                                        ▼
                              ┌─────────────────────────┐
                              │   306 End machining 1   │
                              └─────────────────────────┘
                                        │
┌─────────────────────────┐   ┌─────────────────────────┐
│ 308 Reference Impedance │   │ 307 Measure Impedance of│
│ of exhausted same type  │   │ deployed wire at current│
│         wire            │   │    machining time       │
└─────────────────────────┘   └─────────────────────────┘
            │                             │
            │                             ▼
            │                   ┌─────────────────────────┐
            └──────────────────▶│ 309 Compute residual    │
                                │   wire electrode life   │
                                └─────────────────────────┘
┌─────────────────────────┐               │
│ 310 Estimated duration  │               ▼
│     of machining 2      │        ╱──────────────╲         no    ┌─────────────────────────┐
└─────────────────────────┘        │   311 Can      │─ ─ ─ ─ ─ ─ ▶│   312 Replace spool     │
            │                      │ machining 2 be │            └─────────────────────────┘
            └────────────────────▶│  completed?    │
                                   ╲──────────────╱
                                        │
                                        ▼
                              ┌─────────────────────────┐
                              │   313 Start machining 2 │
                              └─────────────────────────┘
                                        │
                                        ▼
                              ┌─────────────────────────┐
                              │   314 End machining 2   │
                              └─────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3360636 A1
- CN 109822169 A
- CN 206578396 U
- JP S61209819 A